# EUROPEAN PATENT APPLICATION

(11) **EP 1 175 044 A2**
(43) Date of publication of application: **23.01.2002**
(21) Application number: 01305967.0
(22) Date of filing: 11.07.2001
(51) Int. Cl.: H04L 12/28, H04L 12/64, H04L 12/46

(54) **Information processing apparatus, methods and media**

(30) Priority: 18.07.2000 JP 2000217866
(71) Applicant: SONY CORPORATION, Tokyo 141 (JP)
(72) Inventor: Sato, Naoyuki. c/o Intellectual Property Departmen, Shinagawa-ku, Tokyo (JP); Kawamura, Harumi. c/o Intellectual Property Dpt., Shinagawa-ku, Tokyo (JP)
(74) Representative: Pilch, Adam John Michael

(57) **Abstract**

Where reservation has been made via a bridge (22, 24) in e.g., an IEEE 1394 serial data bus (23), and bus resetting has occurred in a bus connecting to a reserve owner, another bus (27) connected to the bridge (22, 24) is able to find the reserve owner. To this end, a controller A (21) sends its own extended unique identifier EUI-64 to a target (25) to be reserved. The target (25) stores the information of part or all of the functions of the target itself as reserved and the EUI-64 of the equipment (node) which has made the reservation for use. In reserving the target (25), a controller B (26) reads out the EUI-64 of the reserve owner from the target (25) and verifies whether or not the reservation is possible. If the reservation is to be made, the controller B (26) writes its own EUI-64 in the target (25).

## Description

This invention relates to an information processing apparatus connected to a network formed e.g., by the IEEE 1394 serial data bus, an information processing method and to a medium for having the information processing apparatus execute a program.

There has recently been developed an AV (audio visual) equipment which allows for reciprocal information transmission over a network employing the IEEE 1394 serial data buses standardized by the IEEE (The Institute of Electrical and Electronics Engineers). In this network system, the AV equipment, connected to the IEEE 1394 serial data buses, can be controlled reciprocally using a pre-set digital interface command (AV/C or command transaction set) referred to below as AV/C command. Each electronic equipment connected to the IEEE 1394 serial data buses is termed a unit, whilst the unit representing the function of each unit is termed a sub-unit. The information stored in each unit can be reciprocally read and written, among the respective units, using the descriptor prescribed in the general specifications of the AV/C command (AV/C digital interface command set general specification, referred to below as AV/C general).

The IEEE 1394 serial data buses are interconnected by bridges constituted by a set of electronic equipment, termed portals, such that data can be transmitted between two or more buses over the bridges. That is, although the number of the equipment (nodes) that can be connected to a sole IEEE 1394 serial data bus is limited to 63 at the maximum, more nodes can be connected by interconnecting plural buses over bridges to constitute a network made up of the buses and the bridges.

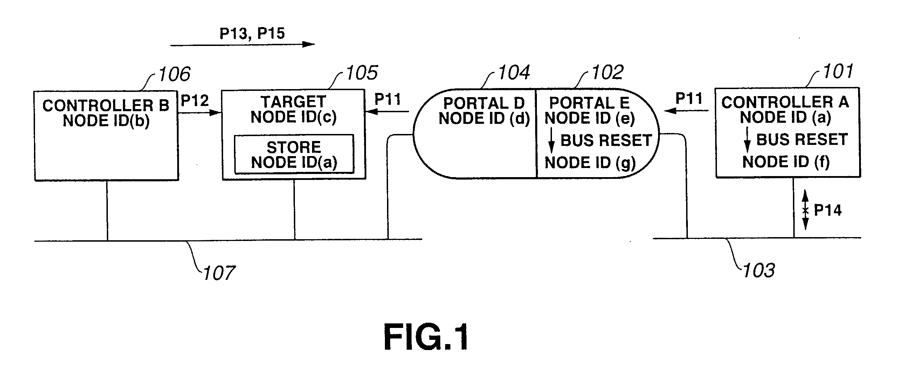

Fig.1 shows an illustrative structure of a state in which the IEEE 1394 serial data buses are interconnected over the bridges.

In Fig.1, nodes 101, 102 are connected to a IEEE 1394 serial data bus 103, whilst nodes 104 to 106 are connected to a IEEE 1394 serial data bus 107. In Fig.1, the nodes 102, 104 serve as portals, these portals making up a bridge interconnecting the buses 103, 107. In the following, the nodes 102 and 103 are termed portals E and D, respectively. The nodes 101, 106 serve as controllers capable of reserving other equipment, whilst the node 105 is a target reserved by the controller. In the following, the nodes 101 and 106 are termed controllers A and B, respectively. It is assumed that, at this time point, the nodes ID(a), ID(b), ID(c), ID(d) and ID(e) are set in the controller A, controller B, target, portal D and in the portal E, respectively.

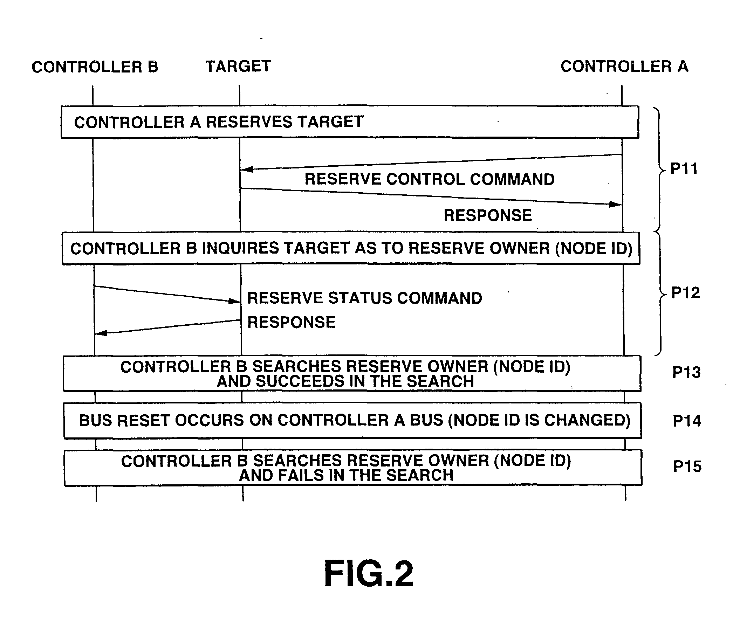

The flow in case the controller A reserves a target, and the controller B is searching a reserve owner reserving the target, is shown in Fig.2.

As a procedure P11, the controller A sends a reserve control command (RESERVE control command), prescribed as AV/C command, to the target (node 105), to reserve the target. The target reserved returns a response to the controller A while memorizing the node ID of the node which has reserved it (here, ID(a) of the controller A). The reserve control command and the response will be explained subsequently.

Next, as a procedure P12, the controller B sends a reserve status command (RESERVE status command) as later explained to the target to inquire after a reserve owner. This inquiry is made by searching a node ID of the reserve owner memorized by the target. Since the reserve owner at this time point is the controller A, the target notifies the node ID(a) of the controller A to the controller B.

This enables the controller B to be apprized as a procedure P13 that the controller A is the reserve owner.

Meanwhile, if bus resetting has occurred on the IEEE 1394 serial data bus, topology re-setting occurs in the bus such that the node ID of each node connected to the bus is set to a new value.

However, the bus reset is not transmitted to outside the bridge such that the information on the second setting of the node ID performed on a bus where the bus reset has occurred is not transmitted to outside the bridge.

That is, in the case of Figs.1 and 2, bus reset has occurred between the controller A and the bus 103, as the procedure P14, the node IDs of the controller A and the portal E connected to the bus 103 are updated. Fig.1 shows a case in which, as a result of bus resetting, the controller A is changed from the node ID(a) to the node ID(f), whilst the portal E is changed from the node ID(e) to the node ID(g).

On the other hand, the controller B or the target of the other bus 107, connected over the bridge, is not aware of the fact that the node ID has been secondarily set by the bus resetting of the bus 103.

Thus, if, after occurrence of bus resetting on the bus 103, the controller B at procedure P16 makes an inquiry of the reserve owner to the target, the latter notifies the node ID(a) of the controller A prior to the occurrence of the bus resetting to the controller B.

However, the node ID of the controller A at this time point is changed to the node ID(f), as described above, such that the controller B is unable to find that the reserve controller is the controller A.

It is therefore an aim of at least an embodiment of the present invention to provide an information processing method and apparatus and a medium in which, if, in case a node is reserved over a bridge, bus resetting occurs in a bus connected to the reserve owner, the node of the other bus connected thereto over the bridge can find the reserve owner.

In one aspect, the present invention provides an information processing apparatus connected to a network to which can be connected a plurality of equipment, including storage means for storing the information of part or all of the functions of a given one of the equipment reserved for use when such reservation for use is made by another one of the plural equipment, the storage means also storing the identification information unique to the other equipment which has made reservation for use of part or all of the functions of the given one of the equipment.

In another aspect, the present invention provides an information processing apparatus connected to a network to which can be connected a plurality of equipment, including writing means for writing the identification information unique to a given one of the plural equipment in storage means of another one of the equipment when reservation for use of part or all of the functions unique to the other equipment is made.

In another aspect, the present invention provides an information processing apparatus connected to a network to which can be connected a plurality of equipment, including readout means for reading out from storage means of another one of the plural equipment, which is connected over the network, and from which part or all of the functions are to be reserved for use, the information of part or all of the functions of the another one equipment reserved for use in the another equipment and the identification information unique to the equipment which has already made the reservation for use.

In still another aspect, the present invention provides an information processing apparatus connected to a network to which can be connected a plurality of equipment, including readout means for reading out from storage means of another one of the plural equipment which is connected over the network, and from which part or all of the functions are to be reserved for use, the information of part or all of the functions of the another one equipment reserved for use and the identification information unique to the equipment already reserved for use, decision means for verifying whether or not the reservation for use is possible based on the information read out, and writing means for writing the identification information unique to a given one of the equipment in storage means of another one of the equipment to be reserved for use if it is verified that the reservation for use is possible.

In still another aspect, the present invention provides an information processing method in which a network is capable of interconnecting a plurality of equipment, comprising the steps of storing the information of part or all of the functions of a given one of the equipment reserved for use when such reservation for use is made by another one of the plural equipment, the storage means also storing the identification information unique to the other equipment which has made reservation for use of part or all of the functions of the given one of the equipment.

In still another aspect, the present invention provides an information processing method in which plural equipment are connected to a network, including writing the identification information unique to a given one of the plural equipment in storage means of another one of the equipment when reservation for use of part or all of the functions unique to the other equipment is made.

In still another aspect, the present invention provides an information processing method in which plural equipment are connected to a network, including reading out from storage means of another one of the plural equipment, which is connected over the network, and from which part or all of the functions are to be reserved for use, the information of part or all of the functions of the another one equipment reserved for use in the another equipment and the identification information unique to the equipment which has already made the reservation for use.

In still another aspect, the present invention provides an information processing method in which plural equipment are connected to a network, including reading out from storage means of another one of the plural equipment which is connected over the network, and from which part or all of the functions are to be reserved for use, the information of part or all of the functions of the another one equipment reserved for use and the identification information unique to the equipment already reserved for use, verifying whether or not the reservation for use is possible based on the information read out and writing the identification information unique to a given one of the equipment in storage means of another one of the equipment to be reserved for use if it is verified that the reservation for use is possible.

In another aspect, the present invention provides a recording medium having stored therein a program including a step of storing the information of part or all of the functions of a given one of the equipment reserved for use when such reservation for use is made by another one of the plural equipment, and storing the identification information unique to the other equipment which has made reservation for use of part or all of the functions of the given one of the equipment.

In still another aspect, the present invention provides a recording medium having stored therein a program including a step of writing the identification information unique to a given one of a plurality of equipment connected over a network, in storage means of another one of the equipment part or all of the functions of which is to be reserved for use.

In still another aspect, the present invention provides a recording medium having stored therein a program including a step of reading out from storage means of another one of the plural equipment connected over the network, and from which part or all of the functions are to be reserved for use, the information of part or all of the functions of the another one equipment reserved for use and the identification information unique to the equipment which has already made the reservation for use.

In yet another aspect, the present invention provides a recording medium having stored therein a program including a step of reading out from storage means of another one of the plural equipment which is connected over the network, and from which part or all of the functions are to be reserved for use, the information of part or all of the functions of the another one equipment reserved for use and the identification information unique to the equipment already reserved for use, verifying whether or not the reservation for use is possible based on the information read out; and writing the identification information unique to a given one of the equipment in storage means of another one of the equipment to be reserved for use if it is verified that the reservation for use is possible.

In the information processing method and apparatus according to the present invention, in which the information on part or all ofthe functions of an own equipment (node) reserved for use and the identification information unique to an equipment (node) which has reserved part or all of the functions of the own equipment for use are stored, and in which reservation is made over a bridge in e.g., the IEEE 1394 serial data bus, a reserve owner can be found by a node of another bus connecting to the bridge even if bus resetting has occurred in a bus connecting to the reserve owner.

In the information processing method and apparatus according to the present invention, in which the identification information proper to an own equipment (node) is written in storage means of another equipment to be reserved for use, and in which reservation has been made over a bridge in e.g., the IEEE 1394 serial data bus, a . reserve owner can be found by a node of another bus connecting to the bridge even if bus resetting has occurred in a bus connecting to the reserve owner.

In the information processing method and apparatus according to the present invention, in which reservation is made over a bridge in e.g., the IEEE 1394 serial data bus, a reserve owner can be found by a node of another bus connecting to the bridge even if bus resetting has occurred in a bus connecting to the reserve owner, by reading out the information on part or all of the functions of another one of the plural equipment already reserved for use and the identification information unique to the equipment which has already made reservation for use, from storage means of the other equipment to be reserved for use.

In the information processing method and apparatus according to the present invention, in which reservation is made over a bridge in e.g., the IEEE 1394 serial data bus, a reserve owner can be found by a node of another bus connecting to the bridge even if bus resetting has occurred in a bus connecting to the reserve owner, by reading out the information on part or all of the functions of another one of the plural equipment already reserved for use and the identification information unique to the equipment which has already made reservation for use, from storage means of the other equipment to be reserved for use, verifying whether or not the reservation for use is possible, based on the information read out and by writing the identification information unique to the own equipment in storage means of the other equipment to be reserved for use.

The present invention will be described further, by way of example only, with reference to preferred embodiments thereof as illustrated in the accompanying drawings, in which:
Fig.1 is a schematic block diagram showing an illustrative structure of a conventional system connected over a bridge to the IEEE 1394 serial data bus.
Fig.2 illustrates the flow when the controller A reserves a target and a controller B searches a reserve owner reserving the target.
Fig.3 illustrates a typical cyclic structure of data transmission over a bus of the IEEE 1394 serial data bus system bus.
Fig.4 shows an illustrative structure of an address space of a CRS architecture.
Fig.5 illustrates typical examples of the positions, names and operations of the main CRS.
Fig.6 illustrates typical examples of the general ROM format.
Fig.7 illustrates typical examples of a bus information block, route directory and unit directory.
Fig.8 illustrates typical examples of the PCR structures.
Figs.9A and 9B illustrate typical structures of oMPR, oPCR, iMPR and iPCR.
Fig.10 illustrates typical relation between plugs, plug control registers and transmission channels.
Fig.11 illustrates typical data structures by the hierarchical descriptor structure.
Fig.12 illustrates typical examples of the descriptor data format.
Fig.13 illustrates typical examples of the generation ID of Fig.12.
Fig.14 illustrates typical examples of the list IDs of Fig.12.
Fig.15 illustrates a typical AV/C command stack model.
Fig.16 illustrates the relation between the FCP command and the response.
Fig.17 illustrates the relation between the command and the response of Fig.16.
Fig.18 is a schematic block diagram showing an illustrative structure of a system in which the IEEE 1394 serial data buses are interconnected over bridges according to an embodiment of the present invention.
Fig.19 illustrates the flow in case the controller A of Fig.1 reserves a target and the controller B is searching a reserve owner who has reserved the target.
Fig.20 illustrates the format of an FCP frame.
Fig.21 illustrates an AV/C command frame format.
Fig.22 illustrates an AV/C response frame format.
Fig.23 illustrates a command type.
Fig.24 illustrates a subunit type.
Fig.25 illustrates a subunit ID.
Fig.26 shows an illustrative format of a reserve control command comprised of an array of EUI-64.
Fig.27 shows another illustrative format of a reserve control command comprised of an array of EUI-64.
Fig.28 illustrates the arrayed positions of the EUI-64 in a configuration ROM.
Fig.29 illustrates the priority arrayed in the reserve control command.
Fig.30 illustrates the format of a reserve status command.
Fig.31 illustrates a response code.
Fig.32 illustrates prompt transactions of AV/C.
Fig.33 illustrates delayed transactions of AV/C.
Fig.34 is a flowchart used for explanation of the processing method in finding a reserve owner.
Fig.35 is a block diagram showing a specified example of a device connected over the IEEE 1394 serial data bus.
Fig.36 is a block diagram showing an illustrative structure of a computer.

First, an IEEE 1394 serial data bus used in the present embodiment is explained.

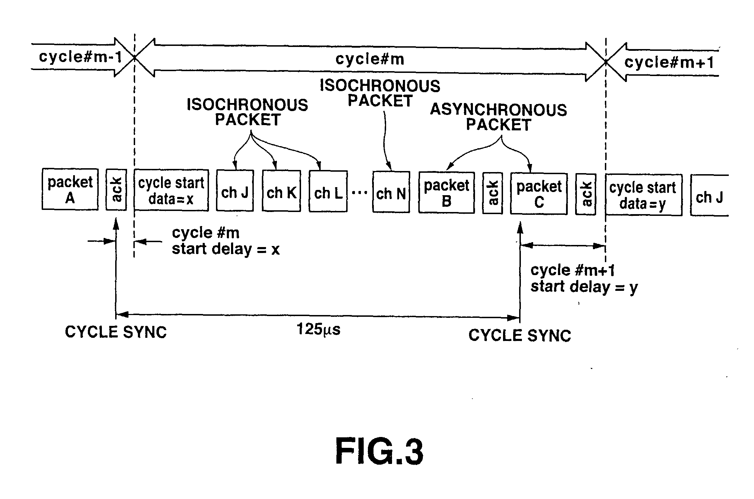

Fig.3 shows a cyclic structure of data transmission of equipment connected over the IEEE 1394 serial data bus. In the IEEE 1394, data is split into packets and transmitted time-divisionally with a 125 µsec cycle as a reference. This cycle is created by a cycle start signal supplied from a node having a cycle master function (any equipment connected to th bus). An isochronous packet acquires a band, so termed though it really means a temporal unit, necessary for transmission, from the leading end of each cycle. Thus, in isochronous transmission of data within a pre-set time duration is assured. However, should transmission errors occur, there is no protective structure, so that data is lost. In asynchronous transmission in which, during a time not used for isochronous transmission of each cycle, a node which as acquired the bus on arbitration sends out asynchronous packets, reliable transmission is assured by using acknowledge and retry. However, the transmission timing is not constant.

In order for a pre-set node to perform isochronous transmission, the node has to cope with the isochronous function. Moreover, at least one of the nodes, accommodating the isochronous function, needs to have the cycle master function. In addition, at least one of the nodes connected to the IEEE 1394 serial data bus needs to have the function of an isochronous resource manager.

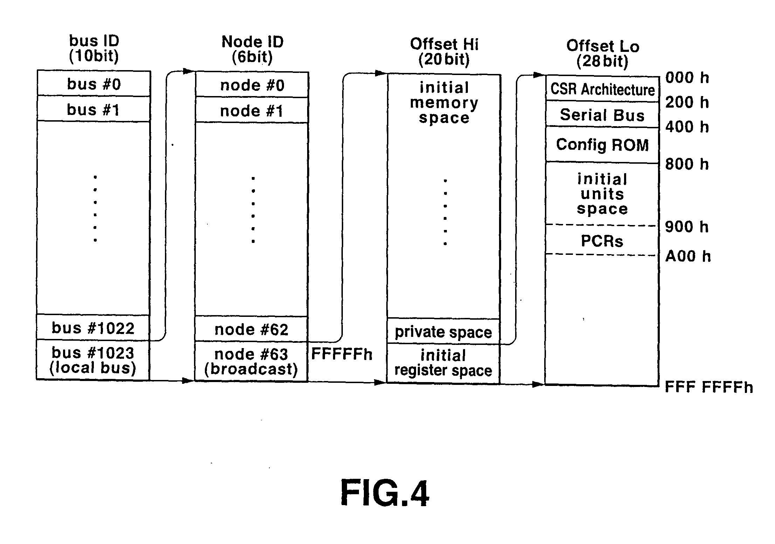

The IEEE 1394 complies with the CSR (ccontrol & status register) architecture having a 64-bit address space provided for in the ISO/IEC 13213. Fig.4 shows the structure of the address space of the CSR architecture. The upper 16 bits are node IDs representing the nodes on each IEEE 1394, with the remaining 48 bits being used for specifying the address space afforded to the respective nodes. The upper 16 bits are further divided into 10 bits of the bus ID and 6 bits of the physical ID (node ID in the narrow sense of the term). All bits being 1 represent a value used for a special objective such that 1023 bues and 63 nodes can be specified.

Of the 256 terabyte address space, prescribed by the lower 48 bits, the space prescribed by upper 20 bits is split into an initial register space (Initial Register Space) used for 2048-byte CSR-peculiar register or a register peculiar to the IEEE 1394, a private space (Private Space) and an initial memory space (Initial Memory Space). If the space prescribed by the upper 20 bits of the space prescribed by the lower 28 bits is the initial register space, the space prescribed by the lower 28 bits is used as the configuration ROM (read-only memory), inital unit space (Initial Unit Space) used for node-specific purpose, or as a plug control register (Plug Control Register (PCR)).

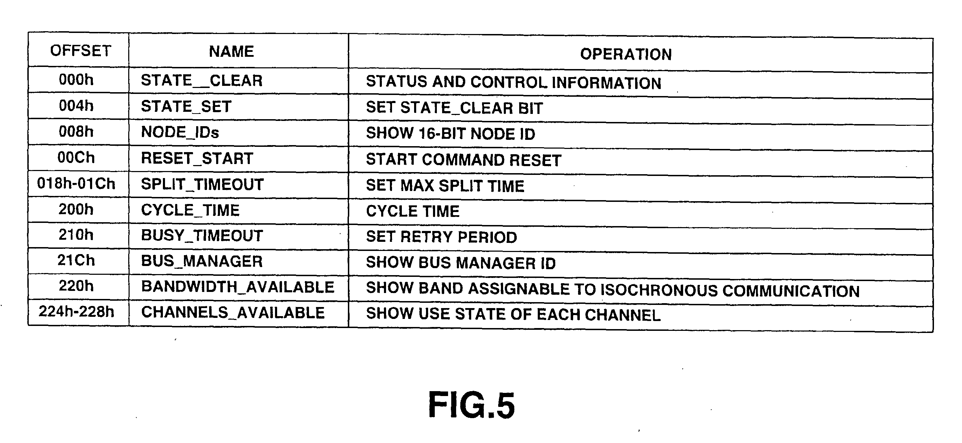

Fig.5 illustrates an offset address, name and the operation of main CSRs. An offset in Fig.5 indicates an offset address from an address FFFFF0000000h at which begins the initial register space. It is noted that h in a number ending in h indicates that the number is a hexadecimal number. A bandwidth available register, having an offset of 220h, denotes a band that can be allocated to isochronous communication. The value of the node operating as an isochronous resource manager is valid, that is, although the CSR of Fig.4 is owned by each node, only the bandwidth available register owned by the isochronous resource manager is valid. Stated differently, only the isochronous resource manager owns the bandwidth available register. A maximum value is assigned to the bandwidth available register if no band is assigned to isochronous communication. The value is decremented each time the band is assigned to the isochronous communication.

In the channel available register (Channel Available Register) with the offset of 224h to 228h, the respective bits correspond to channel numbers from 0 to 63. The bit 0 means that the channel has already been assigned. Only the channel available register of the node operating as the isochronous resource manager is valid.

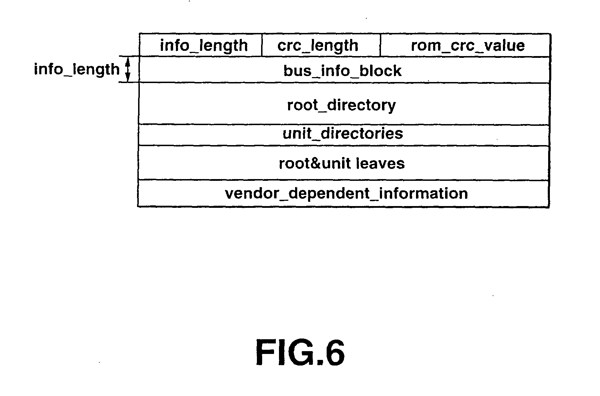

Returning to Fig.4, the configuration ROM (read-only memory) which is based on the general ROM format is arrayed in addresses 200h to 400h in the initial register space. Fig.6 illustrates the general ROM format. The node, as an accessing unit on the IEEE 1394, is able to own plural units operating independently as the address space is used in common in the node. The unit directories (Unit Directories) can indicate the versions or positions of the software for these units. Although the positions of the bus information blocks (bus info blocks) and the root directory are fixed, the positions of the remaining blocks are specified by the block addresses.

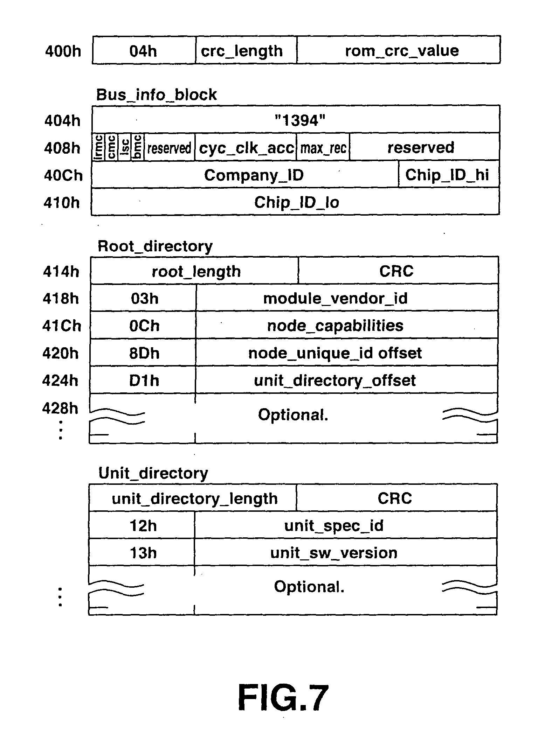

Fig.7 shows details of the bus information block, route directory and unit directories. In the Company ID in the bus info block, ID numbers indicating the makers of the equipment are stored. In the Chip ID, the globally sole ID, not overlapping with other equipment, is stored. Under the standard for the IEC 61833, 00h, Aoh and 2Dh are written in first, second and third octets of the unit spec ID (Unit spec id) of the unit directory, which has met the IEC 61883, respectively. In addition, 01h and 1 are written in a first octet and in the LSB of a third octet of a unit switch version (unit sw version), respectively.

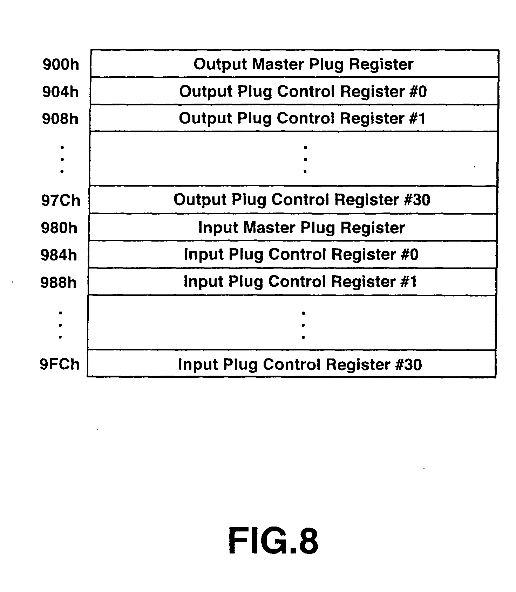

For controlling the input/output of the equipment over an interface, the node has a PCR (Plug Control Register) as prescribed in the IEC 61883 in the addresses 900h to 9FFh in the initial unit space of Fig.4. For logically forming a signal route analogous with an analog interface, the concept plug is materialized. Fig.8 illustrates the structure of the PCR. The PCR denote an output plug. The PCR includes registers oMPR (output Master Plug Register) and an iMPR (input Master Plug Register) indicating the information on the output plug or the input plug proper to each equipment. Although plural oMPRs or iMPRs are not owned by each equipment, it is possible for each equipment to own plural oPCR and iPCR associated with the respective plugs, depending on the capabilities of the equipment. The PCR shown in Fig. 8 includes 31 oPCRs and iPCRs, respectively. The isochronous data flow is controlled by acting on the registers associated with these plugs.

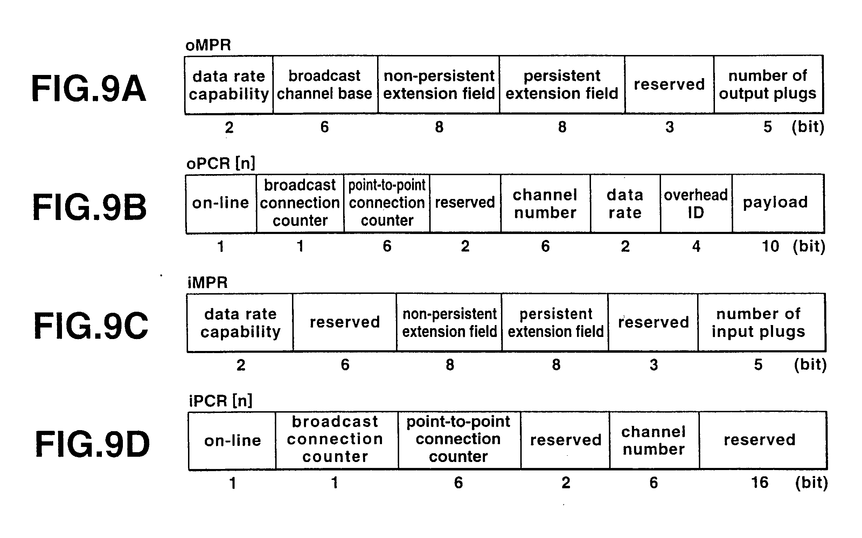

Fig.9 shows the structure of the oMPR, oPCR, iMPR and iPCR. Specifically, Figs.9A, 9B, 9C and 9D show the structures of the oMPR, oPCR, iMPR and iPCR, respectively. In the 2 MSB side data rate capability (data rate capability) of oMPR and iMPR, there are stored codes representing the maximum transmission speed of the isochronous data that can be transmitted or received by the equipment. The broadcast channel base (broadcast channel base) of the oMPR prescribe the number of the channel used for broadcast output.

In the LSB side 5-bit number of output plugs of oMPR, the number indicating the number of output plugs owned by the equipment, that is the number of oPCRs, is stored. In the 5 LSB side number of input plugs (number of input plugs), the number of input plugs, that is the value indicating the number of the iPCRs, is stored. The non-persistent extension field and persistent extension field are areas defined for future extension.

The on-line (on-line) of the MSB of oPCR and iPCR denote the plug using state. That is, if this value is 1, it indicates that the plug is ON-LINE, whereas, if the value is 0, it indicates that the plug is OFF-LINE. The value of the broadcast connection counter of oPCR and iPCR indicate affirmative (1) or negative (0) of the broadcast connection. The value owned by a point-to-point connection counter (point-to-point connection counter) of oPCR and iPCR, having a 6-bit width, indicates the number of the point-to-point connections owned by the plug.

The value of the channel number (channel number) of a 6-bit width of oPCR and iPCR denotes the number of the isochronous channel to which the plug is connected. The value of data rate (data rate) of a 2-bit width of pPCR denotes the actual transmission rate of the isochronous data output from the plug. The code stored in an overhead ID (overhead ID) of a 4-bit width of oPCR indicates the bandwidth of the overhead of the isochronous communication. The payload (payload) of a 10-bit width of oPCR denotes the maximum value of the isochronous packet that can be handled by the plug.

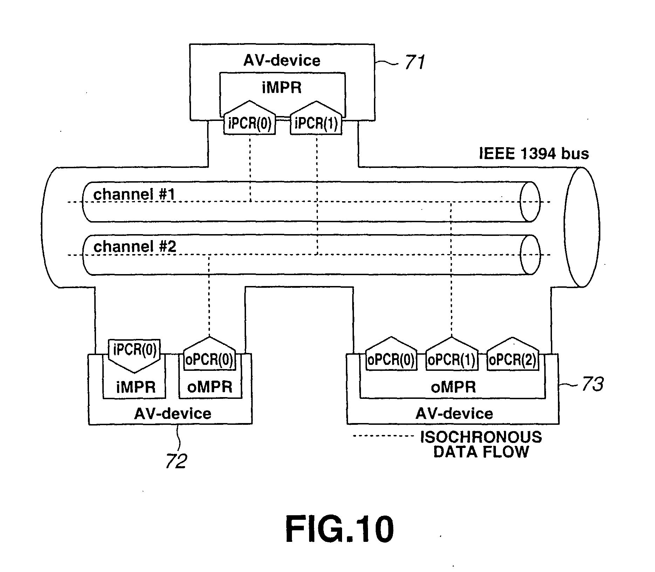

Fig.10 shows the relation between the plug control register and the isochronous channel. The AV devices (AV-device) 71 to 73 are connected over the IEEE 1394 serial data bus. The isochronous data, having a channel specified by oPCR [1], among the oPCR[0] to oPCR[2], the transmission speed and the number of oPCRs of which is prescribed by the oMPR of the AV device 73, is sent out to a channel #1 (Channel #1) of the IEEE 1394 serial data bus. By the transmission speed and iPCR[0] ofthe input channel #1, among the iPCR[0] and iPCR[1], among the iPCR[0] and iPCR[1], the transmission speed and the number of iPCR are prescribed by the iMPR of the AV device 71, the AV device 71 reads in the isochronous data sent out to the channel #1 of the IEEE 1394 serial data bus. Similarly, the AV device 72 sends out isochronous data to the channel #2 (Channel #2) specified by oPCR[o], while the AV device 71 reads in the isochronous data from the channel #2 specified by iPCR[1].

In this manner, data transmission occurs between equipment interconnected over the IEEE 1394 serial data bus. In the system of the present embodiment, the AV/C command set prescribed as commands for controlling the equipment connected over the IEEE 1394 serial data bus is used to check for the state or to control the respective equipment. This AV/C command set is hereinafter explained.

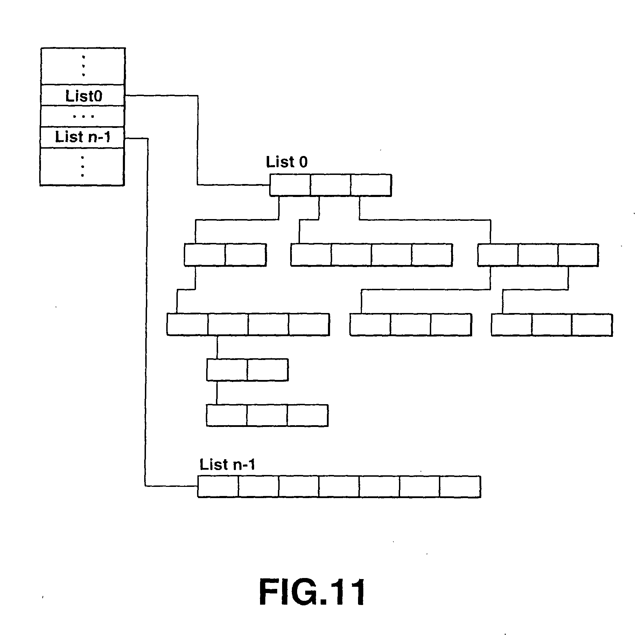

First, a data structure of the Subunit Identifier Descriptor in the AV/C command set used in the system of the present embodiment is explained with reference to Figs. 11 to 14. Fig. 11 shows a data structure of the Subunit Identifier Descriptor. A list of the hierarchical structure of the Subunit Identifier Descriptor is configured as shown in Fig. 11. If the AV equipment is a tuner, the list means channels that can be received, whereas, if the AV equipment is a disc, the list means musical numbers recorded thereon. The list of the uppermost layer of the hierarchical structure is termed a root list, and a list 0, for example, represents a root for the lower order list. The lists 2 to (n-1) also represent root lists. There are as many root lists as there are objects. If the AV equipment is a tuner, an object is each channel in digital broadcast. The totality of lists in one layer co-owns the common information.

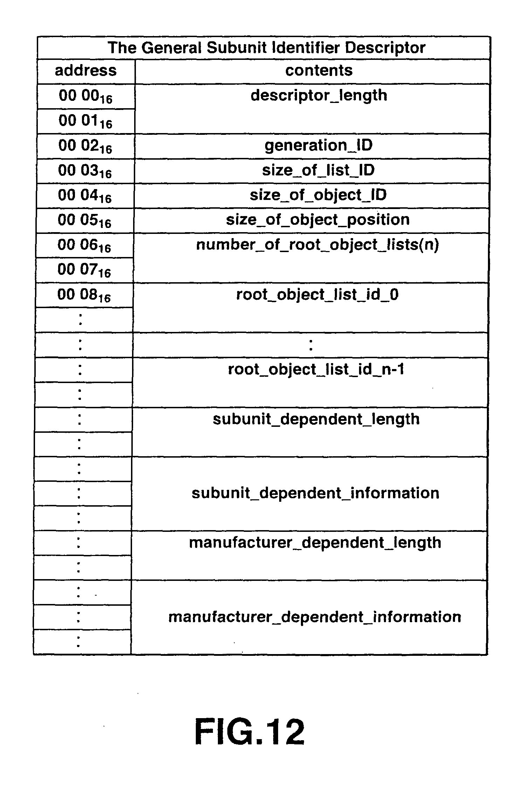

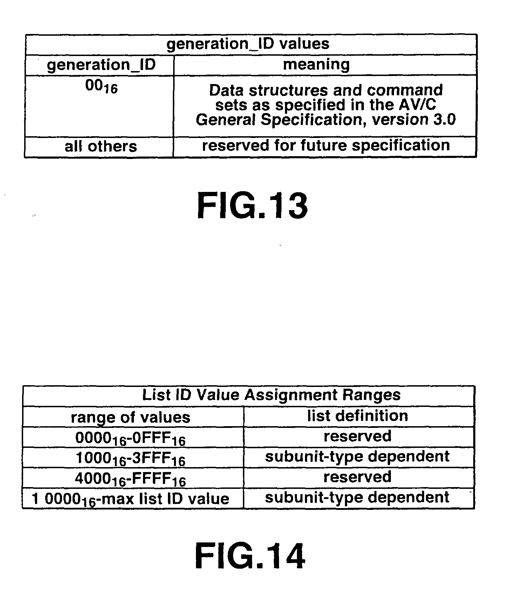

Fig.12 shows a format of the General Subunit Identifier Descriptor used in the pre-existing system. In the Subunit Identifier Descriptor 41, the attribute information pertinent to the functions is stated in the contents. The generation ID denotes the value of the version of the AV/C command set, this value currently being "00h", as shown in Fig.4, where h denotes hexadecimal notation. Specifically, "00h" means that data structure and the command are the version 3.0 of the AV/C General Specification. The totality of the values excepting "00h" are reserved for future specifications, as shown in Fig.13.

The size of list ID denotes the number of bytes of the list ID. The size of list ID denotes the number of bytes of an object. The size of object position denotes the position in the list used in referencing in control. The number of root object lists denotes the number of root object lists. The root object list id denotes the ID for discriminating the uppermost root object list of an independent layer.

The subunit dependent length denotes the number of bytes of the succeeding subunit dependent information field. The subunit dependent information is a field specifying the information proper to the function. The manufacturer dependent length denotes the number of bytes of the manufacturer dependent information field. The manufacturer dependent information is the field specifying the specification information of a vendor (manufacturer). Meanwhile, should there be no manufacturer dependent information, this field does not exist.

Fig.14 shows a range of assignment of the list ID shown in Fig.12. As shown in Fig.14, "0000h to 0FFFh" and "4000h to FFFFh" are reserved as the ranges of assignment for future specifications. "1000h to 3FFFh" and "10000h to max list ID value" are provided for discriminating the functional type attribute information.

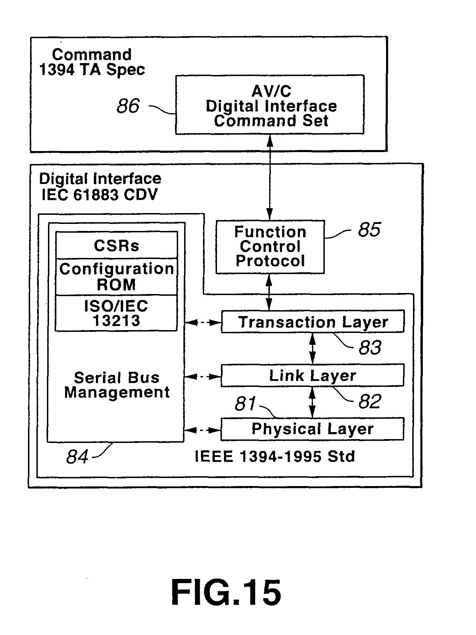

Referring to Figs. 15 to 17, the AV/C command set used in the AV/C command set used in the system of the present embodiment. Fig.15 shows a stack model of the AV/C command set. As shown in Fig.15, a physical layer 81, a link layer 82, a transaction layer 83 and a serial bus management 84 comply with the IEEE 1394. The FCP (Function Control Protocol) complies with the IEC 61883, whist the AV/C command set 86 complies with the 1394 TA specification.

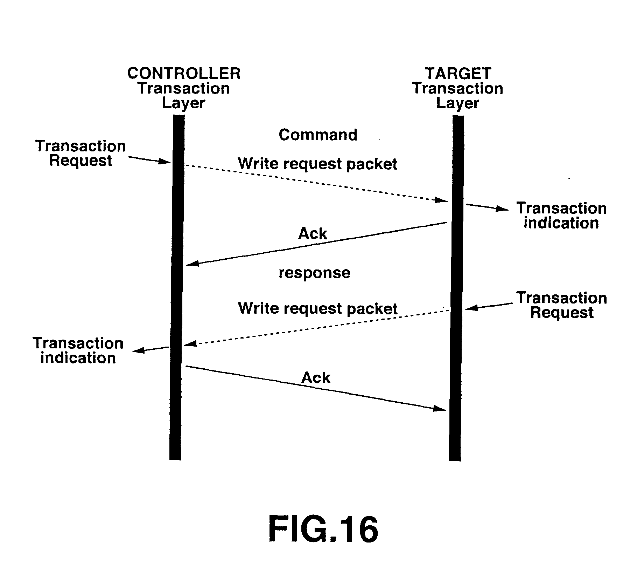

Fig.16 illustrates the command and the response of the FCP 85 of Fig.15. The FCP is a protocol for controlling the AV equipment on IEEE 1394. As shown in Fig.16, the controlling side is the controller and the controlled side is a target. The transmission or the response of the FCP command occurs between the nodes using the write transaction of the asynchronous control of IEEE 1394. On receipt of data, the target returns an acknowledge to the controlling for receipt confirmation.

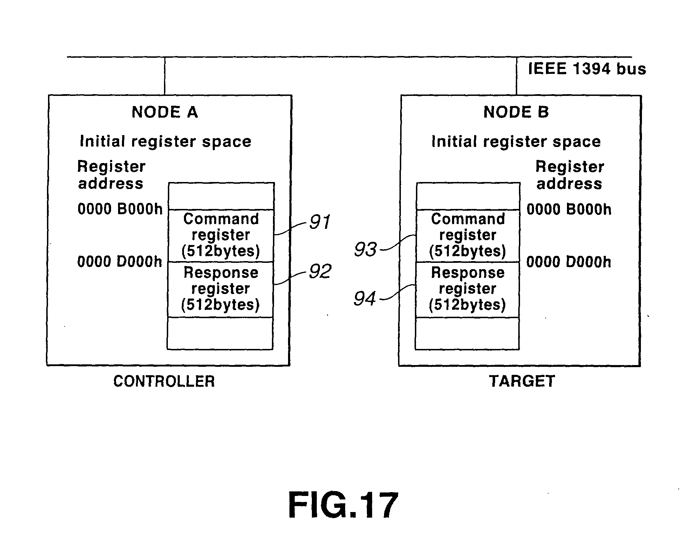

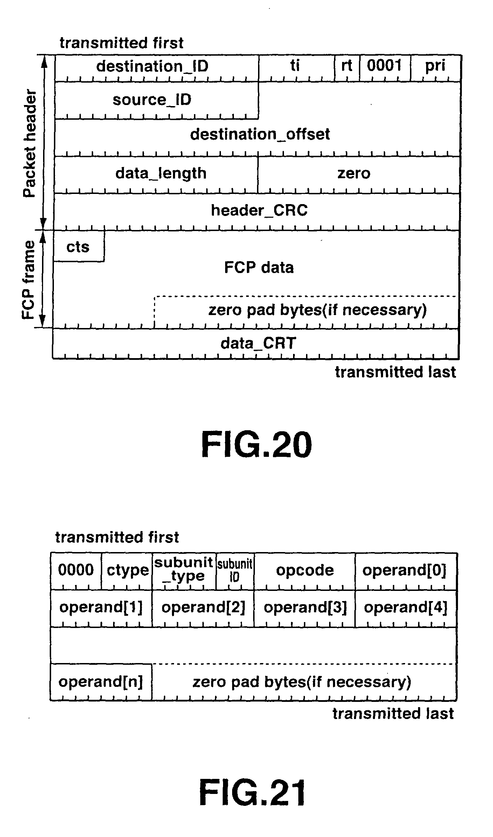

Fig.17 illustrates, in more detail, the command and the response of the FCP shown in Fig.16. The nodes A and B are interconnected over the IEEE 1394 bus, and operate as a controller and as a target, respectively. In both of the nodes A and B, there are provided 512 bytes of the command register and the response register. As shown in Fig.17, the controller writes a command message in a command register 93 of the target to transmit the information. Conversely, the target writes the response message in the response register 92 of the controller. The control information is exchanged responsive to the two messages. The type of the command set sent with the FCP is stated in the CTS in the data field of Fig.20, as will be explained subsequently.

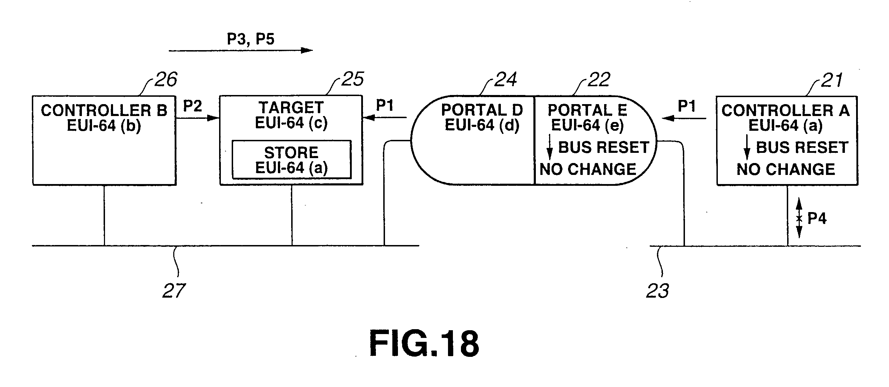

Fig.18 shows an illustrative structure of the present embodiment in which the IEEE 1394 serial data buses are interconnected by bridges.

In this figure, nodes 21, 22 are connected to the IEEE 1394 serial data bus 23, whilst nodes 24 to 26 are connected to the IEEE 1394 serial data bus 27. In the embodiment of Fig.18, nodes 22, 24 represent portals. The nodes 22, 24 are referred to below as portals E and D, respectively. These portals make up a bridge interconnecting the buses 23, 27. The nodes 21, 26 are controllers capable of reserving other equipment. The nodes 21, 26 are referred to below as a controller A and a controller B, respectively. The node 25 is a target reserved by the controller.

In the present embodiment, an EUI (Extended Unique Identifier)-64 is used, in addition to or in place of the node ID explained with reference to Fig.1 for discriminating the respective nodes being reserved. Although not explained in detail, this EUI-64, also termed GUID (Global Unique IDentifier), is the identification information uniquely accorded to each node without regard to the bus structure or bus resetting. In the embodiment of Fig. 18, the EUI-64(a), EUI-64(b), EUI-64(c), EUI-64(d) and EUI-64(e) are accorded to the controller A, controller B, target, portal D and to the portal E, respectively.

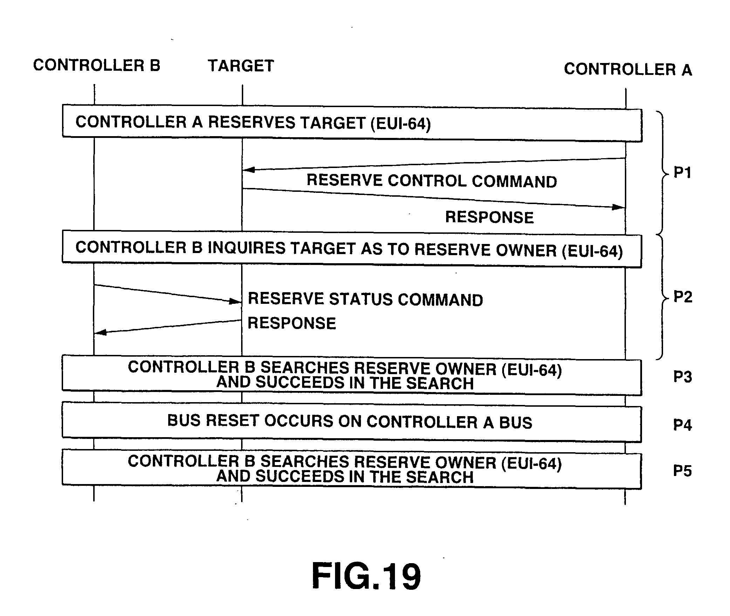

In the present embodiment the flow in case the controller A reserves a target and the controller B searches a reserve owner who has reserved the target is as shown in Fig.19.

As a procedure P1, the controller A sends a reserve control command (RESERVE control command) prescribed as the AV/C command to the target (node 5) to reserve the target. The target, so reserved, returns a response to the controller A, while memorizing the EUI-64 of the node who has reserved it, here the EUI-64(a) of the controller A.

As the next procedure P2, the controller B sends a reserve status command (RESERVE status command) to inquire after the reserve owner. This inquiry is made by searching the EUI-64 of the reserve owner memorized by the target. Since the reserve owner at this time point is the controller A, the target notifies the EUI-64(a) of the controller A to the controller B.

The controller B may now be advised, as a procedure P3, that the controller A is the reserve owner.

It is now assumed that, in the embodiment of Figs. 18 and 19, bus resetting has occurred as procedure P4 between the controller A and the bus 3.

In the embodiment of Figs.1 and 2, should bus resetting have occurred, the node ID of the node connected to the bus is updated. Thus, the controller B is unable to find that the reserve owner is the controller A. However, since the reserve owner is discriminated by the node having the unique EUI-64, the controller B is able to know that the reserve owner is the controller A by finding out that the EUI-64(a) stored in the target.

That is, in the present embodiment, discrimination is made by using the EUI-64 unique to each node, in reserving, so that, even if, when reserving is made via bridge, bus resetting has occurred in the bus connecting to the reserve owner, the node of another bus connecting to the bridge is able to find out the reserve owner.

The controller B then verifies whether or not the use of a certain function of a target can be reserved. If the result is affirmative, the function is reserved.

In the foregoing description, it is assumed that, in reserving a target by the controller B, an inquiry to the target is first made of the EUI-64 of the reserve owner. It is however also possible that an inquiry be made into the node ID of the reserve owner first and, should the reserve owner not be found out because the node ID has been changed due to the bus resetting, an inquiry be made anew as to the reserve owner with the EUI-64. By so doing, it is possible to maintain compatibility even if equipment of an old version that is only able to reserve a node only with the aid of the node ID is connected to the network.

The reserve command in the AV/C general is explained.

The reserve command and the response associated therewith are prescribed as a sort of the command and a response of the AV/C general. The command and the response of the AV/C general are transmitted by FCP (Function Control Protocol) provided for in IEC-61883. The FCP encapsulates the command response controlling an equipment in an asynchronous block write transactions of the IEEE standard 1394-1995. Fig.20 shows the format for FCP.

Referring to Fig.20, the leading end is a packet header, followed by an FCP frame. At the trailing end, data CRC (data_CRC) is arrayed.

At the leading end of the packet header, a destination ID (destination_ID) is arrayed. This destination ID (destination_ID) denotes an ID of the node to which this packet is transferred. In Fig.20, t1 means a transaction label (Transaction label) and denotes a unique tag appended from a node to a packet, while rt means a retry code (Retry code) representing a code pertinent to retry.

In Fig.20, tcode denotes a transaction code (Transaction code) and, in the present embodiment, has a value of 0001, which means that the present block is a write request for a data block.

In Fig.20, pri denotes a priority. By this value, arbitration occurs in a link layer.

The source ID (source_ID) denotes an ID of the node sending out the packet. The destination offset (destination_offset) denotes an address of a register in which the command or the response for this packet is written.

In Fig.20, a data length (data_length) denotes the data length in the data field. In the next two bytes, values 0 are written. The last header CRC (header_CRC) denotes an error correction code in the packet header.

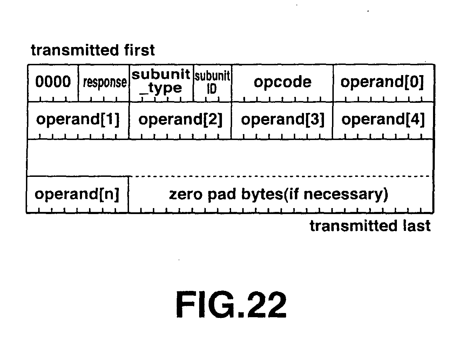

In an FCP frame of a payload part, the CTS (Command/Transaction Set) as the first four bits are arrayed. This CTS has a value of 0000 for the AV/C transaction. The FCP data then is arrayed. This FCP data is shown in detail in Figs.21 and 22. Figs.21 and 22 show an FCP frame of an AV/C command frame and an AV/C response frame, respectively.

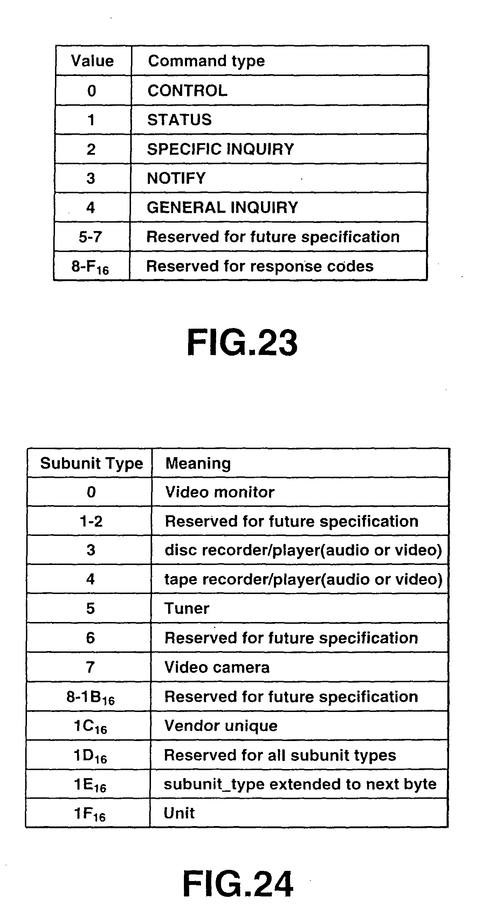

In Fig.22, ctype means a command type (Command type). The values prescribed therein have the meaning as shown in Fig.23. That is, the value 0 denoted control (CONTROL) and the value 1 denotes status (STATUS).

The subunit type (subunit_type) denotes the sort of the subunit being considered by the command as shown in Fig. 24. The value 0 and the value 3 of the code denotes that the subunit type is a video monitor and that the subunit type is a disc recorder or player, respectively.

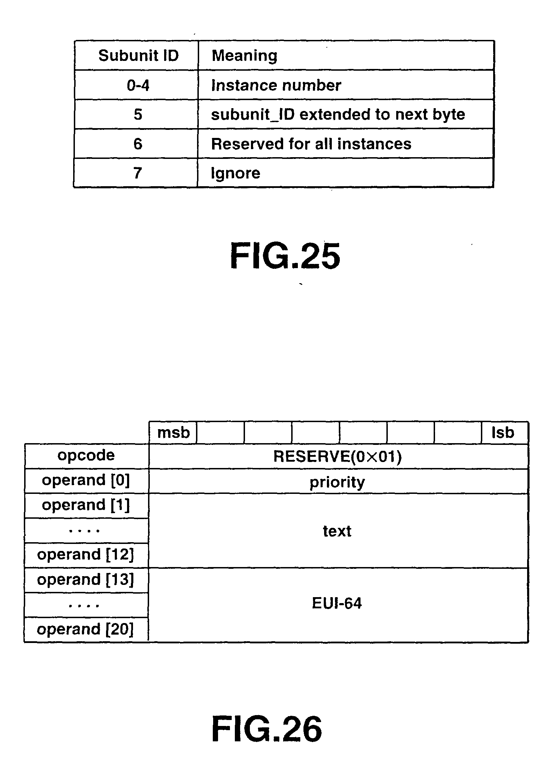

The subunit ID (subunit ID) is used as an instance number in case an extension subunit type has been defined. As shown in Fig.25, the values 0 to 4 denote an instance number and the value 5 denotes that the subunit ID has been expanded to the next byte.

The opcode in Fig.21 denotes an operation code (Operation code) and, in case of reserving explained in the present embodiment, has a value of 01 as shown in Fig. 26. The opcode is followed by an operand [0] (operand [0]) to an operand [n] (operand [n]). In the operand [0] is arrayed a priority. The value 0 of this code indicates that none of the controllers has reserved the node. The values 1 to F of this code denote that the target has the reservation (Reservation) for the controller. The value 4 of the priority is a standard priority used by a controller. The text is arrayed in the operands [1] to [12] (operands [1] to [12]). In the text portion are inserted up to 12 bytes of the ASCII letters or characters.

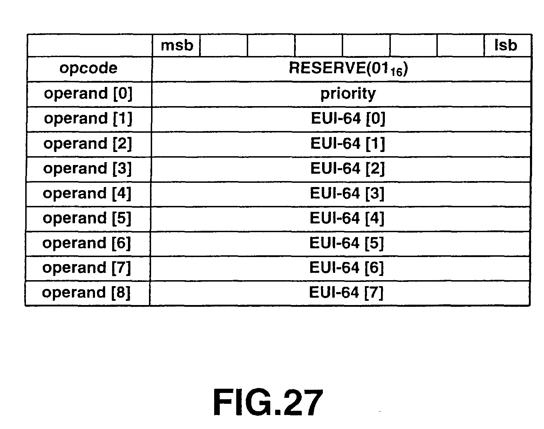

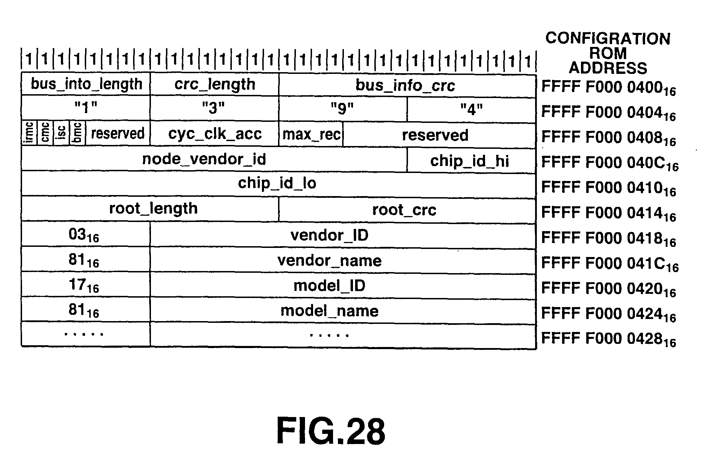

In the present embodiment, there are provided eight operands [13] to [20] (operands [13] to [20]). In these eight operands [13] to [20], the aforementioned EUI-64 is arrayed, alternatively, the EUI-64 may also be arrayed in the eight operands [1] to [8] (operands [1] to [8]), as shown in Fig.27. Specifically, the EUI-64 is comprised of node_vender_id (24 bits), chip_id_hi (8 bits) and chip_id_io (32 bits), totaling at 64 bits. These 64 bits of the EUI-64 are partitioned from the leading end at intervals of eight bits and arrayed in the eight operands of the reserve command. Meanwhile, the node_vender_id (24 bits) are also termed company ID (company_ID) while chip_id_hi (8 bits) and chip_id_io (32 bits), totaling at 40 bits, represent a serial number guaranteed by the IEEE RAC (Registration Authority Committee). As shown in Fig. 28, the aforementioned EUI-64 is recorded in "FFFF F000 040C₁₆" to "FFFF F000 0410₁₆" representing the address of node_vender_id (24 bits), chip_id_hi (8 bits) and chip_id_io (32 bits). The information stored in other addresses of the configuration ROM is already known and hence is not explained specifically.

On the other hand, the target in a free state, that is in a non-reserved state, is reserved by a controller which has issued the reserve control command. The target memorizes the reserved priority, annexed text string, 16-bit node ID and the EUI-64 of the controller.

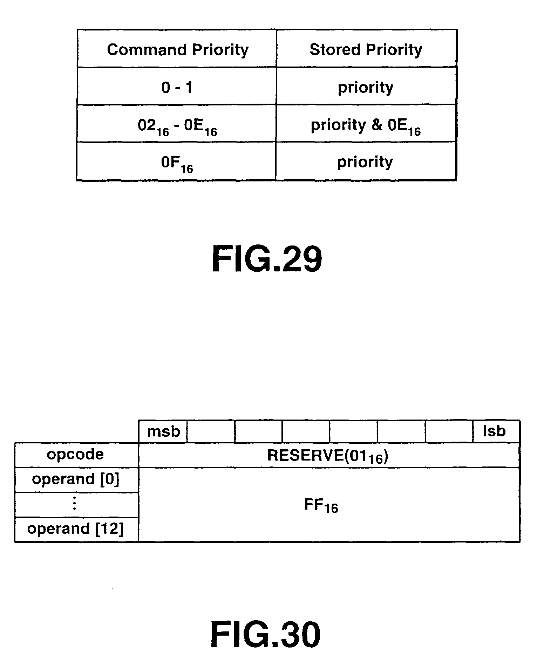

When the priority value is accepted by a target, the value to be held is converted as shown in Fig.29. For example, the values of 0 and 1 are held as priority. The values of from 2 to E (hexadecimal number) are held as priority and E values. The value of F is held as the priority.

In holding the reservation of a pre-set controller, the target node rejects controller commands other than the reserving of the command type of the control (control) issued by other controllers.

If a reserve control command is received from the same controller as holding the reservation, such command is accepted. This allows the original controller to raise or lower the priority accompanying the reservation.

If a reserve control command is received from a controller other than the controller which has made the reservation, the target rejects the command unless the priority thereof is larger than that of the current reservation. If the new priority is larger than the current priority, a new reservation is established.

If a reserve control command is issued to an AV unit having a subunit holding the reservation of the higher priority, the reserve control command returns a reject (rejected) response.

If the reserve control command is issued to an AV unit not containing a subunit having an equal or higher priority, the reservation is established.

If a control command is issued to a subunit in the AV unit reserved by a controller other than the controller which has issued the controller command, the controller command is rejected.

On detection of a bus resetting, an AV unit resets the priority of the reservation to 0, while setting the reservation node ID and the reservation text all to 1. The AV unit rejects all commands of the command type of the control (control), excluding a reserve command, until the reservation is established or 10 seconds have elapsed. This procedure allows a holder ofan original reservation to re-establish the reservation after the bus resetting.

Except if the reservation has been established to a target prior to bus resetting, each controller does not issue a reserve control command within 10 seconds as from the bus resetting. Since the node ID of the AV unit is changed after the bus resetting, the controller desirous to establish the reservation checks for the EUI-64 which is the node unique ID.

In this situation, the target assumes that the reserve command received within 10 seconds as from the bus resetting is correct to accept the reservation.

The controller may request the status of the current reservation by issuing a reserve command having a field of the command type of the status shown in Fig.30.

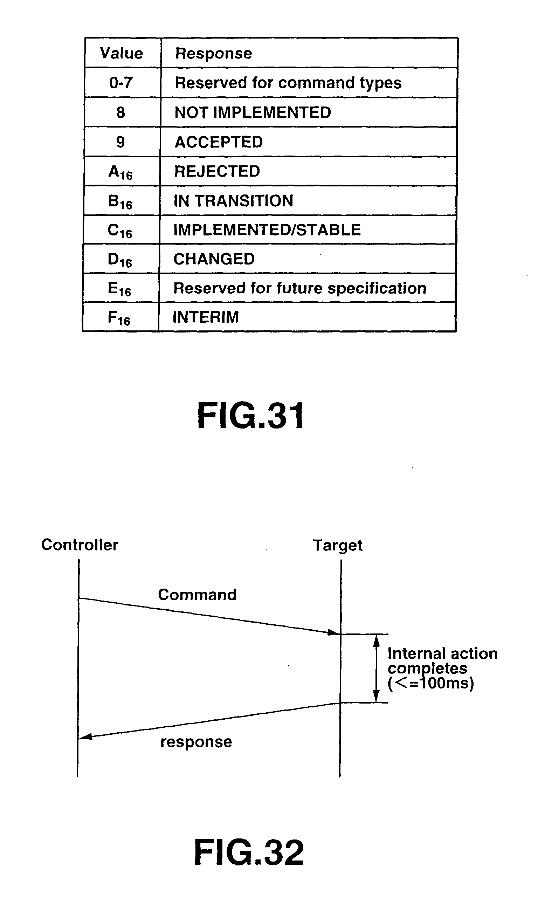

The AV/C response frame, shown in Fig.22, is configured similarly to the AV/C command frame shown in Fig.21. However, a response (response) is arrayed in place of ctype of Fig.21. This response means a response code (response code), with its values 0 to F having the meaning shown in Fig.31. For example, the value 8 means not being adapted to the requested command (NOT IMPLEMENTED), while the value 9 means that the requested command has been accepted (ACCEPTED). The value A means that the corresponding command has been rejected (REJECTED).

Referring to Fig.32, if a controller has issued an AV/C command to a target, which is able to issue a response to the command within 100 ms, the target issues the command.

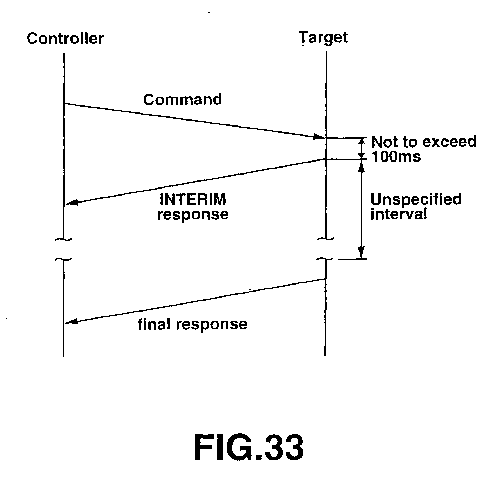

If, after receiving the command (Command), the corresponding processing cannot be completed within 100 ms, as shown in Fig.33, an INTERIM response is issued before 100 ms has elapsed. Then, at a time point of completion of the processing, the target issues a final response (final response).

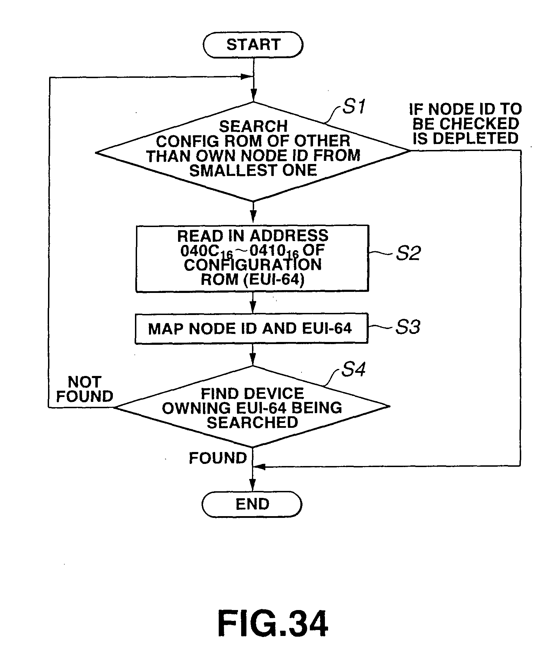

Fig.34 shows a flow of processing for finding a reserve owner. In researching a reserve owner in the present embodiment, search is made at step S1 in the configuration ROM beginning from the least one. At the next step S2, "FFFF F000 0410₁₆" is read from the configuration ROM address "FFFF F000 040C₁₆".

At the next step S3, mapping is made between the node ID and the EUI-64 to find a device having the EUI-64 it is searching. If it is decided that the device cannot be found, the program reverts to step S1. If the device is found, the EUI-64 is taken out as the EUI-64 of the reserve owner.

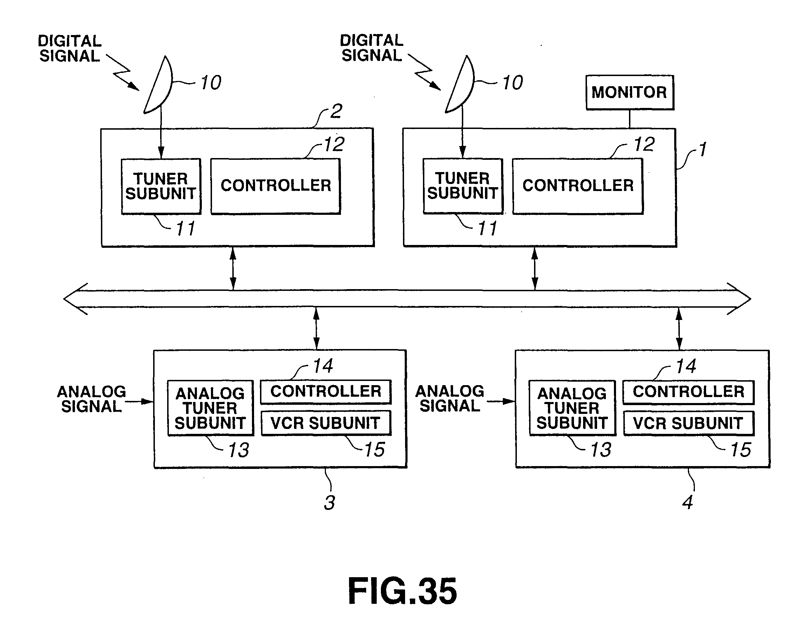

Fig.35 shows a specified typical device which proves the aforementioned controller or target shown in Fig.18.

In the construction shown in Fig.35, IRD 1,2, equivalent to the controllers A, B and which are able to own the function as a portal, and DVCR equivalent to the target, such as a recorder, e.g., a D-VHS, are connected over IEEE 1394 serial data bus 8. Of course, a variety of electronic equipment having an IEEE 1394 terminals, such as personal computer, hard disc drive, CD player, monitor, digital video camera or MD (trademark) player, may be connected to the bus, as are the IRD and the DVCR. It is assumed that the IRD 1,2 are of the same configuration and the DVCR 3, 4 are also of the same configuration.

The controller 12 of the IRD 1, 2 accept operating commands for various functions from a user, such as station selection or recording reserving, to control the IRD 1, 2 in their entirety. The controller 12 is able to control the DVCR 3, 4 using the aforementioned AV/C command. A CS antenna 10 receives digital signals of the digital satellite broadcast, transmitted via a communication satellite, not shown, to output the received signal to a tuner subunit 11. The tuner subunit extracts signals of a desired channel, from digital signals input from the CS antenna 10, to output the extracted signal to a VCR subunit 15, such as DVCR 3 or 4, over a bus 8.

A controller 14 ofthe DVCR 3, 4 accepts operational commands such as replay, recording, fast feed, rewind or recording reservation, from the user, to control the DVCR 3, 4 in their entirety. An analog tuner sub-unit 13 operates under control by the controller 14 to extract signals of a pre-set channel from input analog signals to output the extracted signals to a VCR subunit 15.

The VCR subunit 15 records picture signals input via the analog tuner sub-unit 13 or picture signals input over bus 8 from the tuner subunits 11 of the IRD 1 or 2 on a magnetic tape, not shown.

Although the above-described sequence of operations, such as reservation, may be executed on a hardware, it may also be executed by software. In the latter case, the various functions may be executed by e.g., a personal computer having the program corresponding to the program installed therein or built in a controller as a dedicated hardware.

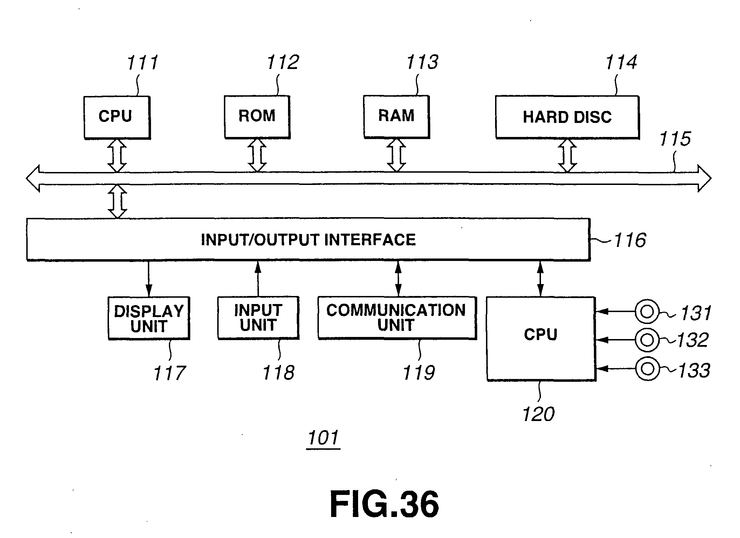

The general-purpose personal computer 101 has enclosed therein a CPU (Central Processing Unit), as shown for example in Fig.36. To the CPU 111 is connected an input/output interface 116 over a bus 115. If the CPU 11 is fed with a command from a user via input/output interface 116 via an input unit 118 such as a keyboard or a mouse, it reads out a program for executing the above-described operations, from a ROM (Read-Only Memory), recording mediums, such as hard disc 114, or recording mediums such as magnetic disc 131, optical disc 132 or a magneto-optical disc 133, loaded on a drive 120, to write the program on a RAM (Random Access Memory) to execute the program. Meanwhile, the program is not limited to such a program as is pre-stored and distributed in this state to the user, but a program transferred from a satellite or a network and received and downloaded by a communication unit 119.

The CPU 111 outputs picture signals, among the results processed by the program, to a display unit 117, comprised of an LCD (liquid crystal display) and a CRT (cathode ray tube), over input/output interface 115.

The following explanation is made of a recording medium used for installing a program for executing the above-described sequence of operations on e.g., a computer for executing the program, with the computer being a general-purpose personal computer.

The program may be furnished to a user in a pre-installed state on a hard disc or in a semiconductor memory, as a recording medium accommodated in the personal computer.

Alternatively, the program may be furnished as a package software as it is transiently or permanently stored in a floppy disc, a CD-ROM (Compact Disc-Read Only Disc), MO (magneto-optical) disc, DVD (digital versatile disc), magnetic disc or a semiconductor memory.

The program may be transferred from a download site over an artificial satellite for digital satellite broadcasting to a personal computer over a radio route, or over cables, through a network, such as local area network or the Internet, so as to be stored in an enclosed hard disc.

The medium in the present embodiment is to be construed in its broad sense to encompass all of these mediums.

In the present embodiment, the step of stating a program furnished by the medium includes not only the processing executed chronologically in accordance with a stated sequence, but also the processing executed in parallel or batch-wise.

The present invention is not limited to the above-described embodiment, but rather may comprise a variety of modifications falling within the scope of the invention.

## Claims

1. An information processing apparatus connected to a network to which can be connected a plurality of equipment, comprising:
storage means for storing the information of part or all of the functions of a given one of the equipment reserved for use when such reservation for use is made by another one of the plural equipment, said storage means also storing the identification information unique to said other equipment which has made reservation for use of part or all of the functions of said given one of the equipment.

2. The information processing apparatus according to claim 1 wherein the apparatus is connected to said network by equipment having the function of interconnecting data buses capable of interconnecting the plural equipment.

3. The information processing apparatus according to claim 1 wherein said network uses an IEEE 1394 serial data bus and wherein EUI-64 as the identification information unique to the equipment is stored in said storage means.

4. An information processing apparatus connected to a network to which can be connected a plurality of equipment, comprising:
writing means for writing the identification information unique to a given one of said plural equipment in storage means of another one of the equipment when reservation for use of part or all of the functions unique to said other equipment is made.

5. The information processing apparatus according to claim 4 wherein the apparatus is connected to said network by equipment having the function of interconnecting data buses capable of interconnecting the plural equipment.

6. The information processing apparatus according to claim 4 wherein said network uses an IEEE 1394 serial data bus and wherein EUI-64 as the identification information unique to the equipment is stored in said storage means.

7. An information processing apparatus connected to a network to which can be connected a plurality of equipment, comprising:
readout means for reading out from storage means of another one of the plural equipment, which is connected over said network, and from which part or all of the functions are to be reserved for use, the information of part or all of the functions of said another one equipment reserved for use in said another equipment and the identification information unique to the equipment which has already made the reservation for use.

8. The information processing apparatus according to claim 7 wherein the apparatus is connected to said network by equipment having the function of interconnecting data buses capable of interconnecting the plural equipment.

9. The information processing apparatus according to claim 7 wherein said network uses an IEEE 1394 serial data bus and wherein said readout means reads out the EUI-64 from storage means of the other equipment to be reserved for use.

10. An information processing apparatus connected to a network to which can be connected a plurality of equipment, comprising:
readout means for reading out from storage means of another one of the plural equipment which is connected over said network, and from which part or all of the functions are to be reserved for use, the information of part or all of the functions of said another one equipment reserved for use and the identification information unique to the equipment already reserved for use;
decision means for verifying whether or not the reservation for use is possible based on the information read out; and
writing means for writing the identification information unique to a given one of the equipment in storage means of another one of the equipment to be reserved for use if it is verified that the reservation for use is possible.

11. The information processing apparatus according to claim 10 wherein the apparatus is connected to said network comprised of a plurality of interconnected data buses by equipment having the function of interconnecting data buses capable of interconnecting the plural equipment.

12. The information processing apparatus according to claim 10 wherein said network uses an IEEE 1394 serial data bus;
said readout means reads out the EUI-64 as said unique identification information from said another one of the equipment from which reservation for use is to be made; and wherein
said writing means writes the EUI-64 as the identification information unique to said one equipment in storage means of said another one of the equipment from which reservation for use is to be made.

13. An information processing method in which a network is capable of interconnecting a plurality of equipment, comprising the step of:
storing the information of part or all of the functions of a given one of the equipment reserved for use when such reservation for use is made by another one of the plural equipment, said storage means also storing the identification information unique to said other equipment which has made reservation for use of part or all of the functions of said given one of the equipment.

14. The information processing method according to claim 13 wherein said network is formed by a plurality of data buses interconnected by equipment having the function of interconnecting data buses capable of interconnecting the plural equipment.

15. The information processing method according to claim 13 wherein said network uses an IEEE 1394 serial data bus and wherein EUI-64 as the identification information unique to the equipment is stored in said storage means.

16. An information processing method connected to a network to which can be connected a plurality of equipment, comprising the step of:
for writing the identification information unique to a given one of said plural equipment in storage means of another one of the equipment when reservation for use of part or all of the functions unique to said other equipment is made.

17. The information processing method according to claim 16 wherein said network is formed by a plurality of data buses interconnected by equipment having the function of interconnecting data buses capable of interconnecting the plural equipment.

18. The information processing method according to claim 16 wherein said network uses an IEEE 1394 serial data bus and wherein EUI-64 as the identification information unique to the equipment is stored in said storage means.

19. An information processing method connected to a network to which can be connected a plurality of equipment, comprising the step of:
reading out from storage means of another one of the plural equipment, which is connected over said network, and from which part or all of the functions are to be reserved for use, the information of part or all of the functions of said another one equipment reserved for use in said another equipment and the identification information unique to the equipment which has already made the reservation for use.

20. The information processing method according to claim 19 wherein said network is formed by a plurality of data buses interconnected by equipment having the function of interconnecting data buses capable of interconnecting the plural equipment.

21. The information processing method according to claim 19 wherein said network uses an IEEE 1394 serial data bus and wherein the EUI-64 is read out from storage means of the other equipment to be reserved for use.

22. An information processing method connected to a network to which can be connected a plurality of equipment, comprising the steps of:
reading out from storage means of another one of the plural equipment which is connected over said network, and from which part or all of the functions are to be reserved for use, the information of part or all of the functions of said another one equipment reserved for use and the identification information unique to the equipment already reserved for use;
verifying whether or not the reservation for use is possible based on the information read out; and
writing the identification information unique to a given one of the equipment in storage means of another one of the equipment to be reserved for use if it is verified that the reservation for use is possible.

23. The information processing method according to claim 22 wherein the apparatus is connected to said network comprised of a plurality of interconnected data buses by equipment having the function of interconnecting data buses capable of interconnecting the plural equipment.

24. The information processing method according to claim 22 wherein said network uses an IEEE 1394 serial data bus;
the EUI-64 is read out as said unique identification information from said another one of the equipment from which reservation for use is to be made; and wherein
the EUI-64 as the identification information unique to said one equipment is written in storage means of said another one of the equipment from which reservation for use is to be made.

25. A recording medium having stored therein a program including a step of storing the information of part or all of the functions of a given one of the equipment reserved for use when such reservation for use is made by another one of the plural equipment, and storing the identification information unique to said other equipment which has made reservation for use of part or all of the functions of said given one of the equipment.

26. A recording medium having stored therein a program including a step of writing the identification information unique to a given one of a plurality of equipment connected over a network, in storage means of another one of the equipment part or all of the functions of which is to be reserved for use.

27. A recording medium having stored therein a program including a step of reading out from storage means of another one of the plural equipment connected over said network, and from which part or all of the functions are to be reserved for use, the information of part or all of the functions of said another one equipment reserved for use and the identification information unique to the equipment which has already made the reservation for use.

28. A recording medium having stored therein a program including a step of reading out from storage means of another one of the plural equipment which is connected over said network, and from which part or all of the functions are to be reserved for use, the information of part or all of the functions of said another one equipment reserved for use and the identification information unique to the equipment already reserved for use;
a step of verifying whether or not the reservation for use is possible based on the information read out; and
a step of writing the identification information unique to a given one of the equipment in storage means of another one of the equipment to be reserved for use if it is verified that the reservation for use is possible.
